(19) Europäisches Patentamt / European Patent Office / Office européen des brevets

(11) **EP 4 300 616 A1**

(12) **EUROPEAN PATENT APPLICATION**
published in accordance with Art. 153(4) EPC

(43) Date of publication:
**03.01.2024 Bulletin 2024/01**

(21) Application number: **22759298.7**

(22) Date of filing: **01.02.2022**

(51) International Patent Classification (IPC):
***H01M 4/13*** *(2010.01)* ***H01M 4/131*** *(2010.01)*
***H01M 4/505*** *(2010.01)* ***H01M 4/525*** *(2010.01)*
***H01M 4/62*** *(2006.01)*

(52) Cooperative Patent Classification (CPC):
**H01M 4/13; H01M 4/131; H01M 4/505; H01M 4/525; H01M 4/62**

(86) International application number:
**PCT/JP2022/003815**

(87) International publication number:
**WO 2022/181257 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2021 JP 2021030629**

(71) Applicant: **Panasonic Intellectual Property Management Co., Ltd.**
**Osaka-shi, Osaka 540-6207 (JP)**

(72) Inventors:
- **SUZUKI Hirotetsu**
**Kadoma-shi, Osaka 571-0057 (JP)**
- **SAKATA Motohiro**
**Kadoma-shi, Osaka 571-0057 (JP)**

(74) Representative: **Novagraaf International SA**
**Chemin de l'Echo 3**
**1213 Onex, Geneva (CH)**

(54) **ELECTRODE MIXTURE FOR BATTERY, AND NON-AQUEOUS ELECTROLYTE SECONDARY BATTERY**

(57) An electrode mixture for a battery according to an embodiment of the present invention comprises an active material capable of intercalation and deintercalation of lithium, and an ionic compound bonded to the surface of the active material. The ionic compound contains a binding site to the active material, an organic cation, and a counter anion for the organic cation. The binding site is derived from, for example, a hydrolyzable silyl group. In addition, the content of the suitable ionic compound is, for example, 0.2-1.8 mass% with respect to the mass of the active material.

Figure 2

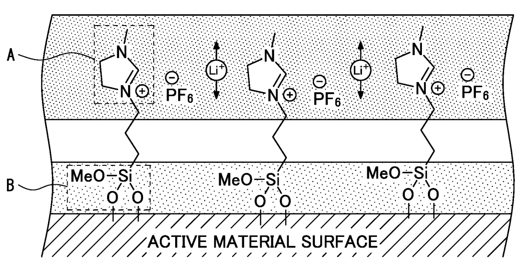


EP 4 300 616 A1

## Description

### TECHNICAL FIELD

The present disclosure generally relates to an electrode mixture for a battery and a non-aqueous electrolyte secondary battery comprising an electrode constituted by using the electrode mixture.

### BACKGROUND ART

An electrode of a non-aqueous electrolyte secondary battery such as a lithium-ion battery commonly comprises a mixture layer including an active material that is able to occlude and release lithium ions. Since the electrode mixture layer significantly affects battery performance such as input and output characteristics, a capacity, and charge-discharge cycle characteristics, many investigations have been made on the electrode mixture constituting the mixture layer. For example, Patent Literature 1 discloses a lithium secondary battery comprising a positive electrode in which a silane-coupling agent is dispersed in a mixture layer, the silane-coupling agent having: an organic reactive group composed of an epoxy group and/or an amino group; and an inorganic reactive group composed of a methoxy group and/or an ethoxy group. Patent Literature 1 discloses that wettability between the positive electrode and an electrolyte solution at a low temperature is improved by dispersing the silane-coupling agent in the positive electrode.

### CITATION LIST

### PATENT LITERATURE

PATENT LITERATURE 1: Japanese Unexamined Patent Application Publication No. 2002-319405

### SUMMARY

### TECHNICAL PROBLEM

It is known that repeating charge and discharge of a battery gradually decreases the capacity due to a side reaction between an active material and an electrolyte solution. Thus, inhibition of this side reaction for inhibiting the decrease in the capacity due to the charge-discharge cycle to improve the cycle characteristics of the battery is an important challenge. The art in Patent Literature 1 does not consider the improvement of the cycle characteristics.

It is an object of the present disclosure to provide an electrode mixture for a battery that can improve the cycle characteristics of the battery.

### SOLUTION TO PROBLEM

An electrode mixture for a battery of an aspect of the present disclosure is an electrode mixture for a battery including an active material that is able to occlude and release lithium, wherein the electrode mixture further includes an ionic compound bonded to a surface of the active material, and wherein the ionic compound contains a bonding moiety to the active material, an organic cation, and a counter anion to the organic cation.

A non-aqueous electrolyte secondary battery of an aspect of the present disclosure comprises: a positive electrode; a negative electrode; and a non-aqueous electrolyte, wherein at least one of mixture layers of the positive electrode and the negative electrode is constituted with the above electrode mixture.

### ADVANTAGEOUS EFFECT OF INVENTION

According to the electrode mixture for a battery according to the present disclosure, the cycle characteristics of the battery can be improved. With the non-aqueous electrolyte secondary battery using the electrode mixture according to the present disclosure, the side reaction between the active material and the electrolyte solution is inhibited to consequently yield excellent cycle characteristics.

### BRIEF DESCRIPTION OF DRAWING

FIG. 1 is a sectional view of a non-aqueous electrolyte secondary battery of an example of an embodiment.

FIG. 2 is a conceptual view illustrating a state of an active material surface of an example of an embodiment.

DESCRIPTION OF EMBODIMENTS

As noted above, inhibition of the side reaction between the active material and the electrolyte solution to improve the cycle characteristics of the battery is an important challenge. The present inventors have made intensive investigation to solve this challenge, and consequently found that a capacity maintenance rate after a charge-discharge cycle is improved to specifically improve the cycle characteristics by adding an ionic compound to be bonded to a surface of the active material. The ionic compound bonded to the active material surface and including an organic cation is considered to function as a cushioning layer preventing a direct contact of the electrolyte solution with the active material surface. This cushioning layer is considered to inhibit the side reaction between the active material and the electrolyte solution, leading to the improvement of the cycle characteristics.

Furthermore, when a content of the ionic compound is greater than or equal to 0.2 mass% and less than or equal to 1.8 mass% relative to the active material, the effect of improving the cycle characteristics is more remarkable. Although the electrode mixture according to the present disclosure may be applied for the negative electrode, the electrode mixture is more effectively applied for the positive electrode.

Hereinafter, an example of embodiments of the electrode mixture for a battery and non-aqueous electrolyte secondary battery according to the present disclosure will be described in detail with reference to the drawings. It is anticipated from the beginning to selectively combine a plurality of embodiments and modified examples described below.

Hereinafter, a cylindrical battery in which a wound electrode assembly 14 is housed in a bottomed cylindrical exterior housing can 16 will be exemplified, but the exterior is not limited to a cylindrical exterior housing can, and may be, for example, a rectangular exterior housing can (rectangular battery), a coin-shaped exterior housing can (coin battery), or an exterior constituted with laminated sheets including a metal layer and a resin layer (laminate battery). The electrode assembly is not limited to a wound electrode assembly, and may be a laminated electrode assembly in which a plurality of positive electrodes and a plurality of negative electrodes are alternately stacked with a separator interposed therebetween. Although the electrode mixture for a battery according to the present disclosure may be applied for an aqueous electrolyte secondary battery using an aqueous electrolyte, the electrode mixture is particularly effective for a non-aqueous electrolyte secondary battery using a non-aqueous electrolyte.

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. The non-aqueous solvent may contain a halogen-substituted derivative in which hydrogen of these solvents is at least partially substituted with a halogen atom such as fluorine. An example of the non-aqueous solvent is ethylene carbonate (EC), ethyl methyl carbonate (EMC), dimethyl carbonate (DMC), a mixed solvent thereof, and the like. For the electrolyte salt, a lithium salt such as $LiPF_6$ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The separator 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding

or the like, and the exterior housing can 16 becomes a negative electrode terminal.

A gasket 28 is provided between the exterior housing can 16 and the sealing assembly 17, and thereby sealability inside the battery is ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically an electrode mixture constituting mixture layers of the positive electrode 11 and the negative electrode 12,will be described in detail.

[Electrode Mixture]

The electrode mixture of an example of an embodiment includes: an active material that is able to occlude and release lithium ions; and an ionic compound bonded to a surface of the active material. The ionic compound contains a bonding moiety to the active material, an organic cation, and a counter anion to the organic cation. The ionic compound has the effect of inhibiting the side reaction between the active material and the electrolyte solution even at an extremely small amount to contribute to the improvement of the cycle characteristics of the battery, but the content of the ionic compound is preferably greater than or equal to 0.2 mass% relative to the mass of the active material. An upper limit of the content of the ionic compound is preferably 1.8 mass%.

Although the electrode mixture of an example of an embodiment may be applied for the negative electrode 12, the electrode mixture is particularly effective for the positive electrode 11. Hereinafter, description will be made with the mixture layer of the positive electrode 11 constituted with the electrode mixture of an example of an embodiment.

[Positive Electrode]

The positive electrode 11 has a positive electrode core 30 and a positive electrode mixture layer 31 provided on a surface of the positive electrode core 30. For the positive electrode core 30, a foil of a metal stable within a potential range of the positive electrode 11, such as aluminum and an aluminum alloy, a film in which such a metal is disposed on a surface layer thereof, and the like may be used. The positive electrode mixture layer 31 is preferably provided on both surfaces of the positive electrode core 30. The positive electrode 11 may be produced for example by applying a slurry of a positive electrode mixture on the positive electrode core 30, and drying and subsequently compressing the coating to form the positive electrode mixture layers 31 on both the surfaces of the positive electrode core 30.

The positive electrode mixture layer 31 includes a positive electrode active material and the above ionic compound. The positive electrode mixture layer 31 preferably further includes a binder and a conductive agent. The positive electrode mixture layer 31 is formed for example by applying the slurry of the positive electrode mixture including the positive electrode active material, the binder, the conductive agent, and the ionic compound on the positive electrode core 30. A dispersion medium of the positive electrode mixture slurry is not particularly limited as long as it may disperse the positive electrode mixture, and an example thereof is N-methyl-2-pyrrolidone (NMP). The ionic compound may be mixed with the positive electrode active material and then form the slurry, or may be added into a slurry in which the positive electrode active material is dispersed to be mixed with the positive electrode active material.

Examples of the binder included in the positive electrode mixture layer 31 (positive electrode mixture) include a fluororesin such as polytetrafluoroethylene (PTFE) and polyvinylidene fluoride (PVdF), polyacrylonitrile (PAN), a polyimide, an acrylic resin, and a polyolefin. With these resins, a cellulose derivative such as carboxymethylcellulose (CMC) or a salt thereof, polyethylene oxide (PEO), and the like may be used in combination. A content of the binder is, for example, greater than or equal to 0.5 mass% and less than or equal to 2.0 mass% relative to the mass of the positive electrode mixture layer 31.

The conductive agent included in the positive electrode mixture layer 31 forms a good conductive path in the mixture layer to contribute to reduction in electric resistance of the mixture layer. Examples of the conductive agent

include: particle conductive agents such as carbon black, acetylene black, Ketjenblack, and graphite; and fibrous conductive agents of conductive agents and the like such as carbon nanotube (CNT), vapor-grown carbon fiber (VGCF), electrospinning carbon fiber, polyacrylonitrile (PAN)-based carbon fiber, pitch-based carbon fiber, and graphene. A content of the conductive agent is, for example, greater than or equal to 0.5 mass% and less than or equal to 2.0 mass% relative to the mass of the positive electrode mixture layer 31.

The positive electrode active material is preferably a lithium-containing transition metal composite oxide. Examples of an element contained in the lithium-containing transition metal composite oxide include Ni, Co, Mn, Na, K, Mg, Ca, Sr, Ba, Sc, Y, La, Ce, Pr, Nd, Sm, Eu, Gd, Tb, Dy, Ho, Er, Tm, Yb, Lu, Ge, Sn, Pb, Sc, Ti, Si, V, Cr, Fe, Cu, Zn, Ru, Rh, Re, Pd, Ir, Ag, Bi, Sb, B, Al, Ga, In, P, Zr, Hf, Nb, Mo, and W. Among them, at least one of Ni, Co, and Mn is preferably contained.

An example of preferable lithium-containing transition metal composite oxides has a layered rock-salt crystal structure, and is a composite oxide represented by the general formula: $LiNi_xM_{1-x}O_2$, wherein M represents at least one selected from the group consisting of Al, Mn, and Co, and $0.3 \leq x < 1.0$. A composite oxide with a high Ni content is effective for increasing the capacity of the battery. The composite oxide represented by the above general formula has good compatibility with a layered silicate salt compound, and using this composite oxide may attempt to increase the capacity of the battery and more effectively improve diffusibility of lithium ions in the positive electrode mixture layer 31.

The positive electrode active material contains the lithium-containing transition metal composite oxide represented by the above general formula as a main component. Here, the main component means a component having the highest mass ratio among constituting components of the composite oxide. Although the positive electrode mixture layer 31 may contain a composite oxide other than the composite oxide represented by the above general formula in combination as the positive electrode active material, a content of the above composite oxide is preferably greater than or equal to 50 mass%, and may be substantially 100 mass%. The composition of the composite oxide may be measured by using an ICP emission spectrometer (iCAP6300, manufactured by Thermo Fisher Scientific K.K.).

The lithium-containing transition metal composite oxide is of, for example, secondary particles formed by aggregation of a plurality of primary particles. An example of a median diameter (D50) of the lithium-containing transition metal composite oxide on a volumetric basis is greater than or equal to 1 μm and less than or equal to 20 μm, or greater than or equal to 2 μm and less than or equal to 15 μm. The D50 is a particle diameter at which a volumetric integrated value is 50% in a particle size distribution measured by a laser diffraction scattering method. A BET specific surface area of the composite oxide is, for example, greater than or equal to 1.0 $mm^2/g$ and less than or equal to 4.0 $mm^2/g$. The BET specific surface area within this range easily achieves both of the high durability and the high capacity. The BET specific surface area is measured in accordance with a BET method (nitrogen adsorption method) described in JIS R1626.

The positive electrode mixture layer 31 includes the ionic compound, as noted above. The ionic compound is a compound containing a bonding moiety to the positive electrode active material, an organic cation, and a counter anion to the organic cation, and chemically bonded to the particle surface of the positive electrode active material via the bonding moiety. A content of the ionic compound is preferably greater than or equal to 0.2 mass%, more preferably greater than or equal to 0.3 mass%, and particularly preferably greater than or equal to 0.5 mass%, relative to the mass of the positive electrode active material. An upper limit of the content of the ionic compound is preferably 1.8 mass%, more preferably 1.7 mass%, and particularly preferably 1.5 mass%.

FIG. 2 is a conceptual view illustrating a state of the particle surface of the positive electrode active material. As illustrated in FIG. 2, it is considered that the ionic compound bonded to the particle surface of the positive electrode active material allows the organic cation moiety in the ionic compound to function as a cushioning layer to inhibit the side reaction between the active material and the electrolyte solution. Therefore, the capacity hardly decreases even with repeated charge and discharge of the battery, and excellent cycle characteristics are obtained. In particular, the effect of improving the cycle characteristics is remarkable when the content of the ionic compound is greater than or equal to 0.2 mass% and less than or equal to 1.8 mass% relative to the positive electrode active material. An example of a preferable range of the content of the ionic compound is greater than or equal to 0.2 mass% and less than or equal to 1.8 mass%, greater than or equal to 0.3 mass% and less than or equal to 1.7 mass%, or greater than or equal to 0.5 mass% and less than or equal to 1.5 mass%, relative to the mass of the positive electrode active material.

The bonding moiety to the positive electrode active material of the ionic compound is connected to the organic cation via, for example, a hydrocarbon chain. On the surface of the positive electrode active material, a functional group such as a hydroxy group is present. Thus, a functional group of the ionic compound reacts with the functional group on the surface of the positive electrode active material to form the chemical bond of the bonding moiety. The functional group of the ionic compound may be any as long as it reacts with the functional group of the positive electrode active material, and an example of preferable functional groups is a hydrolysable silyl group, an epoxy group, a carboxyl group, or the like. Among them, a hydrolysable silyl group is preferable. That is, the bonding moiety of the ionic compound is preferably derived from a hydrolysable silyl group. In this case, a layer including Si may be formed on the surface of the positive electrode active material, which is considered to improve the protective function on the active material surface.

The hydrolysable silyl group is, for example, an alkoxysilyl group. FIG. 2 exemplifies a bonding moiety derived from a trimethoxysilyl group. The alkoxysilyl group is not limited to a methoxysilyl group, and may be an ethoxysilyl group and the like. Not all the functional groups of the ionic compound may be bonded to the surface of the positive electrode active material, and an ionic compound not bonded to the surface of the positive electrode active material may be present in the positive electrode mixture layer 31.

The organic cation of the ionic compound may be any as long as it is electrochemically stable in the positive electrode mixture layer 31 and it does not deteriorate stability in the positive electrode mixture slurry used for forming the positive electrode mixture layer 31. The organic cation includes, for example, at least one selected from the group consisting of an ammonium cation, an imidazolium cation, a piperidinium cation, a pyridinium cation, a pyrrolidinium cation, a morpholinium cation, a sulfonium cation, and a phosphonium cation. Among them, an imidazolium cation, an ammonium cation, a phosphonium cation, a piperidinium cation, a pyridinium cation, and a pyrrolidinium cation are preferable.

In the present embodiment, an A part in the molecular structure of the ionic compound illustrated in FIG. 2 is defined as the organic cation, and a B part therein is defined as the bonding moiety. In FIG. 2, the organic cation is a 1-methylimidazolium cation. The organic cation is not limited thereto, may be a 1-alkylimidazolium cation, a 1,2-alkylimidazolium cation, or the like (the alkyl group is, for example, an alkyl group having less than or equal to 10 carbon atoms), or may be an organic cation other than an imidazolium cation. The organic cation and the bonding moiety are connected via a hydrocarbon chain. An example of this hydrocarbon chain is a linear hydrocarbon having less than or equal to 10 or less than or equal to 5 carbon atoms.

The anion of the ionic compound may be any, as in the cation, as long as it is electrochemically stable in the positive electrode mixture layer 31 and it does not deteriorate stability in the positive electrode mixture slurry used for forming the positive electrode mixture layer 31. The anion includes, for example, at least one selected from the group consisting of $PF_6^-$, $BF_4^-$, $N(SO_2CF_3)_2^-$, $N(SO_2F)_2^-$, $PO_2F_2^-$, a bisoxalateborate anion, and a difluorooxalateborate anion. Among them, $PF_6^-$, $BF_4^-$, $N(SO_2CF_3)_2^-$, and $PO_2F_2^-$ are preferable. When the ionic compound is used for the negative electrode 12 manufactured by using an aqueous slurry, an imide anion is preferably applied as the anion.

In the ionic compound, a content of the bonding moiety to the positive electrode active material is, for example, less than or equal to 0.5 mass% relative to the total mass of the positive electrode active material and the ionic compound. When the bonding moiety is derived from the functional group containing silicon (Si) such as a hydrolysable silyl group, the content of Si is preferably greater than or equal to 0.03 mass% and less than or equal to 0.25 mass% relative to the total mass of the positive electrode active material and the ionic compound. The content of Si may be measured by inductively coupled plasma mass spectroscopy (ICP-MS). The content of Si within this range yields good reactivity of the ionic compound with the surface of the positive electrode active material and may more effectively inhibit the side reaction between the active material and the electrolyte solution.

The ionic compound is bonded to the surface of the positive electrode active material by reacting the functional group such as the hydrolysable silyl group with the functional group on the surface of the positive electrode active material for example by mixing with a powder of the positive electrode active material or by mixing in the positive electrode mixture slurry in which the positive electrode active material is dispersed. This reaction may be performed at a room temperature. The ionic compound may be synthesized for example by a method described in Examples, described later.

[Negative Electrode]

The negative electrode 12 has a negative electrode core 40 and a negative electrode mixture layer 41 provided on a surface of the negative electrode core 40. For the negative electrode core 40, a foil of a metal stable within a potential range of the negative electrode 12, such as copper, a film in which such a metal is disposed on a surface layer thereof, and the like may be used. The negative electrode mixture layer 41 is preferably provided on both surfaces of the negative electrode core 40. The negative electrode 12 may be produced for example by applying a slurry of a negative electrode mixture on the negative electrode core 40, and drying and subsequently compressing the coating to form the negative electrode mixture layers 41 on both the surfaces of the negative electrode core 40. The negative electrode mixture layer 41 (negative electrode mixture) includes a negative electrode active material and a binder. The negative electrode mixture layer 41 may further include the above ionic compound to be bonded to a surface of the negative electrode active material.

The negative electrode mixture layer 41 includes, for example, a carbon-based active material that reversibly occludes and releases lithium ions as the negative electrode active material. A preferable carbon-based active material is graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material constituted with at least one of Si and a Si-containing compound may be used, and the carbon-based active material and the Si-based active material may be used in combination.

For the binder included in the negative electrode mixture layer 41, a fluororesin, PAN, a polyimide, an acrylic resin, a polyolefin, and the like may be used as in the case of the positive electrode 11, but styrene-butadiene rubber (SBR) is preferably used. The negative electrode mixture layer 41 preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination. The negative electrode mixture layer 41 may include a conductive agent.

[Separator]

For the separator 13, a porous sheet having an ion permeation property and an insulation property is used. Specific examples of the porous sheet include a fine porous thin film, a woven fabric, and a nonwoven fabric. For a material of the separator 13, a polyolefin such as polyethylene, polypropylene, and a copolymer of ethylene and an α-olefin, cellulose, and the like are preferable. The separator 13 may have any of a single-layered structure and a stacked structure. On a surface of the separator 13, a heat-resistant layer including inorganic particles, a heat-resistant layer constituted with a highly heat-resistant resin such as an aramid resin, a polyimide, and a polyamideimide, and the like may be formed.

EXAMPLES

Hereinafter, the present disclosure will be further described with Examples, but the present disclosure is not limited to these Examples.

<Example 1>

[Synthesis of Ionic Compound A1]

Into a predetermined reaction vessel, 3-trimethoxysilylpropyl chloride and 1-methylimidazole were added, and the mixture was stirred at 95°C for 24 hours. After allowing the reaction container to be cooled, dehydrated ether was added into the reaction vessel, and the mixture was stirred, left to stand, and a supernatant liquid was removed. This procedure was repeated four times, an underlayer oil was dried under high vacuum at 40°C to have a constant weight to obtain a compound A0 represented by the formula (1).

[Formula 1]

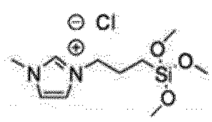

20

In a glove box, the compound A0, dehydrated dichloromethane, and sodium hexafluorophosphate were added into a predetermined reaction vessel, and the mixture was stirred at a room temperature for five days. Thereafter, this suspension was filtered with a membrane filter, the filtrate was concentrated to be solidified, and then dried under high vacuum at 40°C to obtain an ionic compound A1 represented by the formula (2).

[Formula 2]

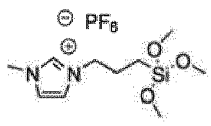

[Production of Positive Electrode]

As a positive electrode active material, a lithium-containing transition metal composite oxide was used. The positive electrode active material, acetylene black, polyvinylidene fluoride, and the ionic compound A1 were mixed at a predetermined mass ratio, and N-methyl-2-pyrrolidone (NMP) was used as a dispersion medium to prepare a positive

electrode mixture slurry. Then, the positive electrode mixture slurry was applied on a positive electrode core made of aluminum foil, the coating was dried and compressed, and then cut to a predetermined electrode size to obtain a positive electrode.

[Preparation of Non-Aqueous Electrolyte solution]

Ethylene carbonate (EC), ethyl methyl carbonate (EMC), and dimethyl carbonate (DMC) were mixed at a predetermined volume ratio. Into this mixed solvent, $LiPF_6$ was added to obtain a non-aqueous electrolyte solution.

[Production of Test Cell]

The above positive electrode and a negative electrode made of lithium metal foil were oppositely disposed with a separator interposed therebetween to constitute an electrode assembly, and the electrode assembly and the above non-aqueous electrolyte were housed in an exterior constituted with an aluminum laminated sheet. Thereafter, an opening of the exterior was sealed to obtain a test cell (non-aqueous electrolyte secondary battery).

Cycle characteristics (capacity maintenance rate after cycle) of the test cell of Example 1 were evaluated by the following method (the same applied to Examples and an Comparative Example described later). Table 1 shows the evaluation results together with the amount of the ionic compound added and the like.

[Evaluation of Cycle Characteristics]

Under a temperature environment at 25°C, the test cell of Example 1 was charged at a constant current of 0.2 C until a battery voltage reached 4.5 V, and charged at a constant voltage of 4.5 V until a current value reached 0.02 C. Thereafter, the test cell was discharged at a constant current of 0.2 C until the battery voltage reached 2.5 V. This charge-discharge cycle was repeated with 50 cycles.

A discharge capacity at the 1$^{st}$ cycle and discharge capacity at the 50$^{th}$ cycle of the cycle test were determined to calculate a capacity maintenance rate by the following formula.

$$\text{Capacity Maintenance Rate (\%)} = (\text{Discharge Capacity at } 50^{th} \text{ Cycle} / \text{Discharge Capacity at } 1^{st} \text{ Cycle}) \times 100$$

<Examples 2 to 6>

Test cells were produced in the same manner as in Example 1 except that, in the production of the positive electrode, the amount of the ionic compound A1 added relative to the positive electrode active material was changed to amounts added shown in Table 1.

<Example 7>

A test cell was produced in the same manner as in Example 4 except that an ionic compound A2 in which the counter anion was changed from $PF_6$ to $PO_2F_2$ was used.

<Example 8>

A test cell was produced in the same manner as in Example 4 except that an ionic compound A3 in which the counter anion was changed from $PF_6$ to bisfluorosulfonylimide (FSI) was used.

<Comparative Example 1>

A test cell was produced in the same manner as in Example 1 except that, in the production of the positive electrode, the ionic compound A1 was not added.

[Table 1]

| | Ionic compound | Counter anion | Amount added (mass%) | Capacity maintenance rate |
|---|---|---|---|---|
| Example 1 | A1 | $PF_6$ | 0.25 | 93.9% |

(continued)

| | Ionic compound | Counter anion | Amount added (mass%) | Capacity maintenance rate |
|---|---|---|---|---|
| Example 2 | A1 | $PF_6$ | 0.50 | 94.1% |
| Example 3 | A1 | $PF_6$ | 0.75 | 94.4% |
| Example 4 | A1 | $PF_6$ | 1.00 | 94.9% |
| Example 5 | A1 | $PF_6$ | 1.50 | 94.4% |
| Example 6 | A1 | $PF_6$ | 1.75 | 93.6% |
| Example 7 | A2 | $PO_2F_2$ | 1.00 | 95.0% |
| Example 8 | A3 | FSI | 1.00 | 94.9% |
| Comparative Example 1 | - | - | - | 93.5% |

As shown in Table 1, the test cells of Examples all have higher capacity maintenance rates after the charge-discharge cycle than the test cell of Comparative Example, and have excellent cycle characteristics. In particular, the effect of improving the cycle characteristics is more remarkable when the amount of the ionic compound added relative to the active material is less than or equal to 1.75%, particularly when the amount is less than or equal to 1.50 mass%.

REFERENCE SIGNS LIST

10 non-aqueous electrolyte secondary battery, 11 positive electrode, 12 negative electrode, 13 separator, 14 electrode assembly, 16 exterior housing can, 17 sealing assembly, 18, 19 insulating plate, 20 positive electrode lead, 21 negative electrode lead, 22 grooved portion, 23 internal terminal plate, 24 lower vent member, 25 insulating member, 26 upper vent member, 27 cap, 28 gasket, 30 positive electrode core, 31 positive electrode mixture layer, 40 negative electrode core, 41 negative electrode mixture layer

## Claims

1. An electrode mixture for a battery, including an active material that is able to occlude and release lithium, wherein

    the electrode mixture further includes an ionic compound bonded to a surface of the active material, and
    wherein the ionic compound contains a bonding moiety to the active material, an organic cation, and a counter anion to the organic cation.

2. The electrode mixture according to claim 1, wherein a content of the ionic compound is greater than or equal to 0.2 mass% and less than or equal to 1.8 mass% relative to the mass of the active material.

3. The electrode mixture according to claim 1 or 2, wherein the organic cation includes at least one selected from the group consisting of an ammonium cation, an imidazolium cation, a piperidinium cation, a pyridinium cation, a pyrrolidinium cation, a morpholinium cation, a sulfonium cation, and a phosphonium cation.

4. The electrode mixture according to any one of claims 1 to 3, wherein the counter anion includes at least one selected from the group consisting of $PF_6^-$, $BF_4^-$, $N(SO_2CF_3)_2^-$, $N(SO_2F)_2^-$, $PO_2F_2^-$, a bisoxalateborate anion, and a difluorooxalateborate anion.

5. The electrode mixture according to any one of claims 1 to 4, wherein the bonding moiety is derived from a hydrolysable silyl group.

6. The electrode mixture according to any one of claims 1 to 5, wherein a content of silicon is greater than or equal to 0.03 mass% and less than or equal to 0.25 mass% relative to the total mass of the active material and the ionic compound.

7. The electrode mixture according to any one of claims 1 to 6, wherein the active material includes a lithium-containing transition metal composite oxide.

**8.** The electrode mixture according to claim 7, wherein the lithium-containing transition metal composite oxide has a layered rock-salt crystal structure, and includes a composite oxide represented by the general formula: $LiNi_xM_{1-x}O_2$, wherein M represents at least one selected from the group consisting of Al, Mn, and Co, and $0.3 \leq x < 1.0$.

**9.** A non-aqueous electrolyte secondary battery, comprising:

a positive electrode;
a negative electrode; and
a non-aqueous electrolyte, wherein
at least one of mixture layers of the positive electrode and the negative electrode is constituted with the electrode mixture according to any one of claims 1 to 8.

Figure 1

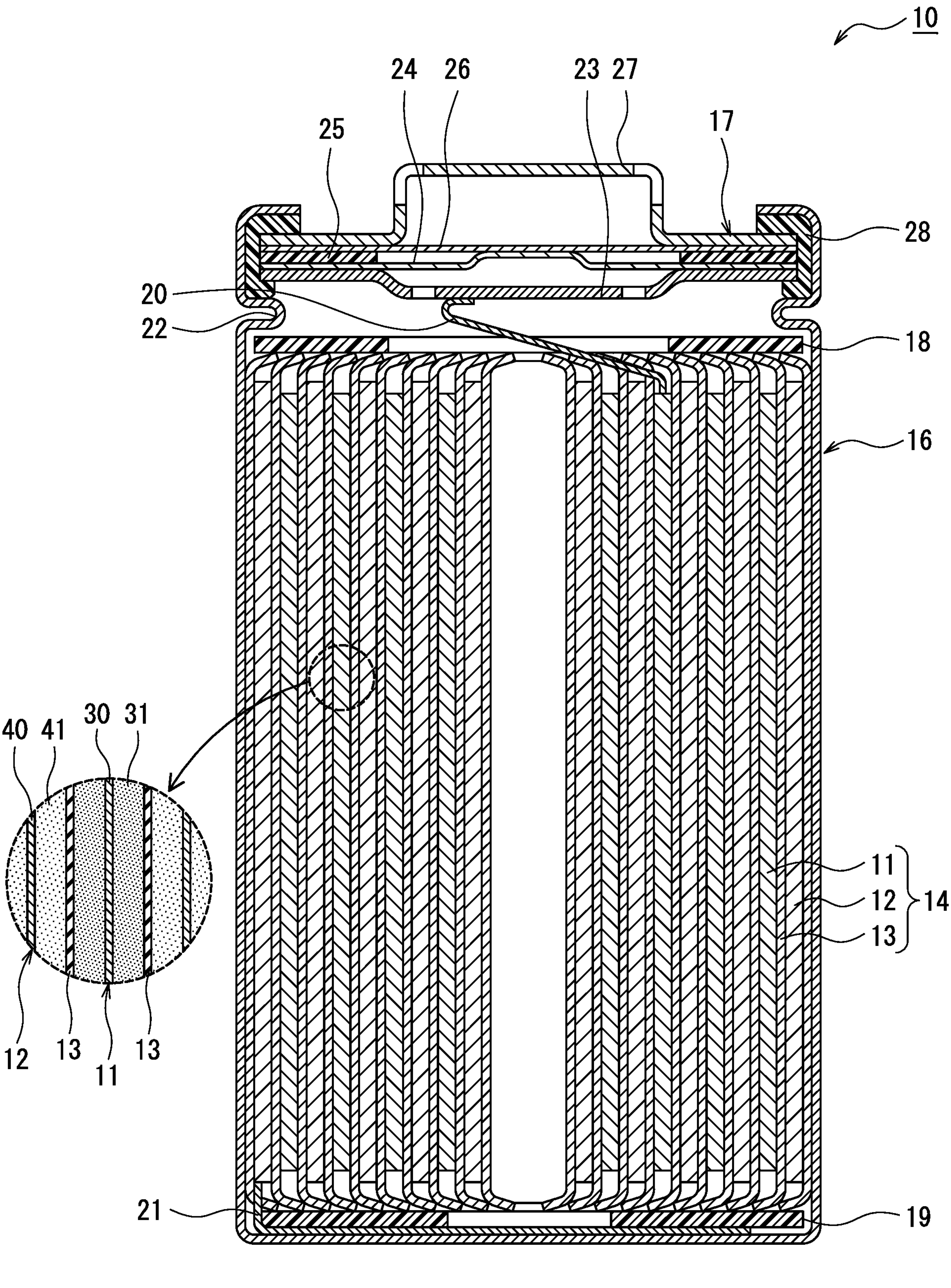
10
24
26
23
27
25
17
28
20
22
18
16
40
41
30
31
11
12
13
14
12
13
11
13
21
19

Figure 2

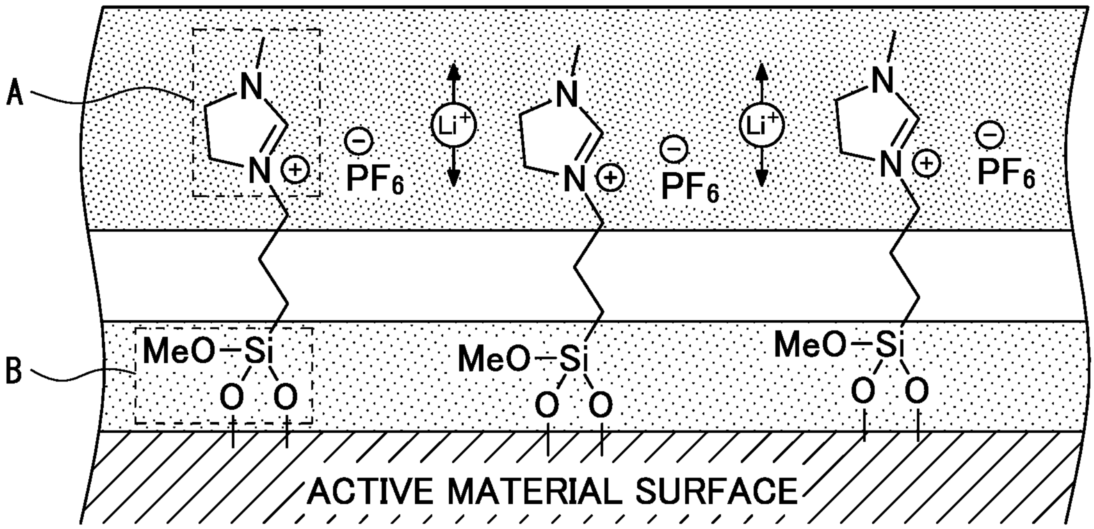

## INTERNATIONAL SEARCH REPORT

International application No.
**PCT/JP2022/003815**

**A. CLASSIFICATION OF SUBJECT MATTER**

***H01M 4/13***(2010.01)i; ***H01M 4/131***(2010.01)i; ***H01M 4/505***(2010.01)i; ***H01M 4/525***(2010.01)i; ***H01M 4/62***(2006.01)i
FI: H01M4/13; H01M4/525; H01M4/505; H01M4/131; H01M4/62 Z

According to International Patent Classification (IPC) or to both national classification and IPC

**B. FIELDS SEARCHED**

Minimum documentation searched (classification system followed by classification symbols)

H01M4/00-4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | CN 107834070 A (WANG, Lixuan) 23 March 2018 (2018-03-23)<br>paragraphs [0005], [0027], [0031]-[0032], [0048], example 1 | 1-5, 7-9<br>6 |
| X | US 2016/0079590 A1 (SAMSUNG ELECTRONICS CO., LTD.) 17 March 2016 (2016-03-17)<br>paragraphs [0040]-[0047], [0105]-[0108], [0117]-[0118], [0126]-[0130], fig. 1 | 1-6, 9 |
| Y | CN 111303489 A (SOUTH CHINA UNIVERSITY OF TECHNOLOGY) 19 June 2020 (2020-06-19)<br>paragraph [0042] | 6 |
| A | JP 2019-515481 A (SAMSUNG SDI CO., LTD.) 06 June 2019 (2019-06-06)<br>claims 1-6, paragraphs [0113]-[0122], fig. 2 | 1-9 |
| A | CN 107863493 A (LIN, Gaoli) 30 March 2018 (2018-03-30)<br>paragraph [0009], example 1 | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2022/003815**

| Patent document cited in search report | Publication date (day/month/year) | Patent family member(s) | Publication date (day/month/year) |
|---|---|---|---|
| CN 107834070 A | 23 March 2018 | (Family: none) | |
| US 2016/0079590 A1 | 17 March 2016 | KR 10-2016-0031828 A<br>paragraphs [0032]-[0039], [0099]-[0103], [0118]-[0120], [0136]-[0141], fig. 1 | |
| CN 111303489 A | 19 June 2020 | (Family: none) | |
| JP 2019-515481 A | 06 June 2019 | US 2019/0112453 A1<br>claims 1-6, paragraphs [0152]-[0160], fig. 2<br>WO 2017/196105 A1<br>KR 10-2017-0127721 A | |
| CN 107863493 A | 30 March 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002319405 A